# EUROPEAN PATENT APPLICATION

(11) **EP 2 363 779 A1**
(43) Date of publication of application: **07.09.2011**
(21) Application number: 10155628.0
(22) Date of filing: 05.03.2010
(51) Int. Cl.: G06F 1/18, G11B 33/12

(54) **Fixing module of a computer host and an electronic device and fixing device of an electronic device**

(71) Applicant: Giga-Byte Technology Co., Ltd., Taipei 231 (TW); Gigazone International Co., Ltd., Taipei 231 (TW)
(72) Inventor: Lin, Ching-Tang, 231, Hsin Tien, Taipei County (TW)
(74) Representative: Schwerbrock, Florian

(57) **Abstract**

A fixing module of a host and an electronic device is provided. The fixing module includes an engaging portion on the host, a hole on the electronic device and a fixing device. The fixing device includes a first connecting portion and a first member with a first engaging part, a second member with a second engaging part, a connecting element between the first member and the second member to make the first member and the second member to rotate relatively, and an elastic member to connect to the engaging portion. The first connecting portion is connected to the hole for connecting the fixing device to the electronic device. The first engaging part is connected to the second engaging part to make the first member cover the second member.

## Description

### BACKGROUND OF THE INVENTION

### Field of the Invention

The present invention relates to a fixing module of host and electronic device and a fixing device of electronic device, and more particularly to a fixing device and a fixing module to retain and support a hard disk or an optical disk in a computer host.

### Description of the Prior Art

A personal computer is provided with data storage devices, such as hard disk or optical disk, which generally assembled in the computer by means of locking bolts. Bolts and screwdriver are required for assembling the data storage devices in the computer host, where the bolts are usually furnished when purchasing a computer. However, Tightening/loosening bolts to mount/dismount the data storage device is a time-consuming and laborious job. Besides, the bolts tend to be lost which leads to inconvenience in operation.

### SUMMARY OF THE INVENTION

The main objective of the present invention is to provide a fixing device of electronic device to make the electronic device fixed to the computer host. The electronic device includes a plurality of holes. The computer host includes engaging portions with a plurality of depression parts. The fixing device includes a first member provided with a first connecting portion and a first engaging part, a second member provided with a second engaging part, a connecting element between the first member and the second member to make the first member and the second member to rotate relatively centred around the connecting element, and an elastic member to connect to the engaging portion. The first connecting portion is connected to the hole for connecting the fixing device to the electronic device. The first engaging part is connected to the second engaging part to make the first member cover the second member.

Preferably, the second member further includes a second connecting portion which is aperture, in order that the first connecting portion which is protruding can extends through the second connecting portion to be connected to the hole when the first member is covered to the second member.

Preferably, the connecting element is structured to be hinge or other flexible means which can be bended.

Preferably, the elastic member is U- shaped which is mounted on the second member.

Preferably, the elastic member includes a engaging side which contacts to the engaging portion to make the fixing device fixed to the computer host, a connecting side which conncected adjacent to the second member, a bending part formed between the engaging side and the connecting side to make a clearance therebetween, and a positioning spot which is protruded out of the engaging side and connected to one of the depression parts.

Preferably, the first member includes a first end and a second end, where the first engaging part is protruded out of the first end and the second end is connected to the connecting element.

Preferably, the second member includes a first end and a second end, where the second engaging part is protruded out of the first end and the second end is connected to the connecting element.

Preferably, the second engaging part includes a connecting part, a projection part and a press part. One end of the connecting part is mounted on the first end of the second member in a flexible mode. The projection part and the press part is connected to the other end of the connecting part.

Preferably, the second engaging part is J-shaped.

Another objective of the present invention is to provide a fixing module of a computer host and an electronic device. The fixing module includes an engaging portion on the computer host, a hole on the electronic device and a fixing device. The fixing device includes a first member provided with a first connecting portion and a first engaging part, a second member provided with a second engaging part, a connecting element between the first member and the second member to make the first member and the second member to rotate relatively centred around the connecting element, and an elastic member to connect to the engaging portion. The first connecting portion is connected to the hole for connecting the fixing device to the electronic device. The first engaging part is connected to the second engaging part to make the first member cover the second member.

Preferably, the engaging portion is structured to be box-shaped groove.

Preferably, the computer host includes a casing and the engaging portion is mounted on the casing.

Preferably, the electronic device includes a side face and the hole is formed in the side face.

The above and further objects, features and advantages of the present invention will become more apparent from the following detailed description of embodiments taken in conjunction with the accompanying drawings.

### BRIEF DESCRIPTION OF THE DRAWINGS

FIG. 1 is a diagram that shows the fixing device of electronic device;
FIG. 2 is a diagram that shows the fixing device of electronic device being folded;
FIG. 3 is a diagram that shows the fixing device of electronic device fixed to the electronic device after being folded;
FIG. 4, FIG.5 is an assembled perspective view showing the computer host, the electronic device and the fixing module.

### DETAILED DESCRIPTION OF THE INVENTION

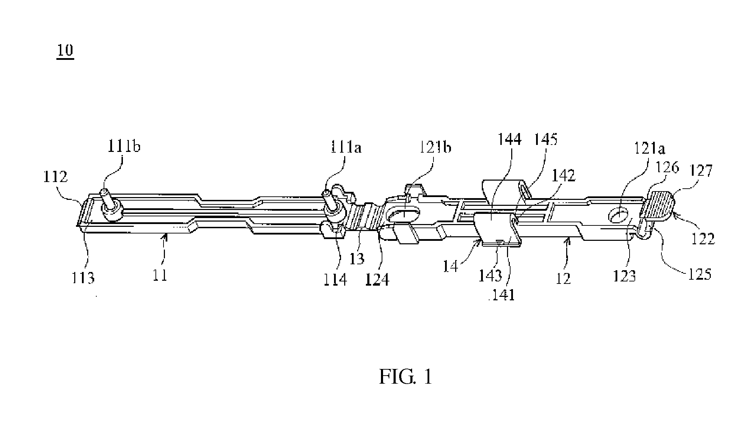

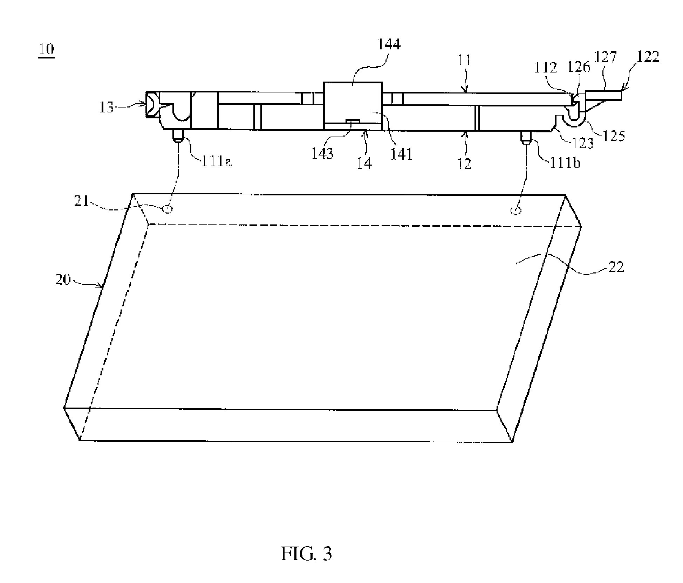

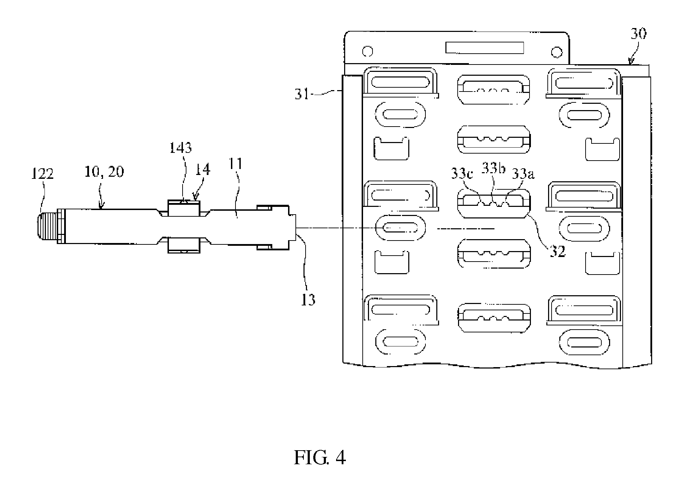

FIG. 1 is a diagram that shows the fixing device of electronic device. As shown in FIG.1, the fixing device 10 of electronic device makes the electronic device 20 (shown in FIG.3) fixed to the computer host 30 (shown in FIG.4). The fixing device 10 includes a first member 11 provided with a first connecting portion 111a, 111b and a first engaging part 112, a second member 12 provided with a second connecting portion 121a, 121b and a second engaging part 122, a connecting element 13 between the first member 11 and the second member 12 to make the first member 11 and the second member 12 to rotate relatively centred around the connecting element 13, so that the first member 11 can be folded to a overlapping position via the connecting element 13 to cover the second member 12.

The elastic member 14 includes a engaging side 141, a connecting side 142 which conncected adjacent to the second member 12, a positioning spot 143 which is protruded out of the engaging side 141, and a bending part 144 formed between the engaging side 141 and the connecting side 142 to make a clearance 145 therebetween. Due to the abundance of flexibility that the clearance 145 possess, upon the fixing device 10 being fixed to the computer host30, the engaging side 141 and the connecting side 142 can be compressed for extending through the engaging portion 32, thereby facilitating assmbling in operation. Preferably, the elastic member 14 is U-shaped.

According to the preferred embodiment, the first connecting portion 111a, 111b are protruding, the second connecting portion 121a, 121b are aperture correspondingly, thus when the first member 11 is covered to the second member 12 as shown in FIG.3, the first connecting portion 111a, 111b can extends through the second connecting portion 121a, 121b. Preferably, the connecting element 13 is structured to be hinge or flexible means which can be bended, thereby the first member 11 and the second member 12 can be folded to a overlapping position. Besides, the first member 11 includes a first end 113 and a second end 114, where the first engaging part 112 is situated on the first end 113 and the second end 114 is connected to the connecting element 13. The second member 12 includes a first end 123 and a second end 124, where the second engaging part 122 is situated on the first end 123 and the second end 124 is connected to the connecting element 13. The first end 113 of the first member 11 corresponds to the second end 124 of the second member 12.

The second engaging part 122 includes a connecting part 125, a projection part 126 and a press part 127. One end of the connecting part 125 is mounted on the first end 123 of the second member 12 in a flexible mode. The projection part 126 and the press part 127 is connected to the other end of the connecting part 125. Preferably, the second engaging part 122 is J-shaped.

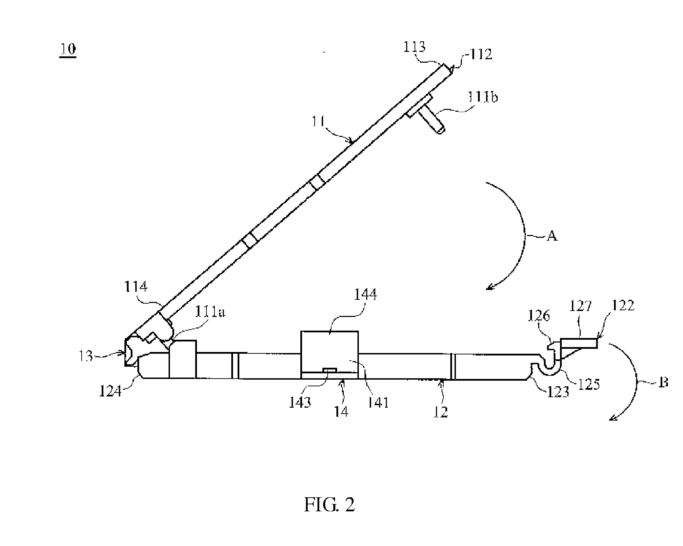

Now referring to Fig.1 to 3, the electronic device 20 includes a side face 22 and a plurality of holes 21 which formed in the side face 22. When the user wants to fix the fixing device to the electronic device 20, the first member 11 is folded in the direction of arrow A as shown in FIG.2, till the first engaging part 112 of the first member 11 is substantially engaged with the second engaging part 122 of the second member 12, and the first connecting portion 111a, 111b extends repectively through the second connecting portion 121a, 121b of the second member 12 which is structured to be aperture, then the first connecting portion 111a, 111b inserts into the hole 21 of the electronic device 20, thereby making the fixing device 10 fixed to the electronic device 20. When the first engaging part 112 is joined to the second engaging part 122, the first engaging part 112 firstly promotes the second engaging part 122 in the direction of arrow B serving to be deformed elastically, due to the connecting part 125 of the second engaging part 122 mounted on the second member 12 in a flexible mode, so that the first member 11 can be engaged with the second member 12 substantially, and fixedly connected to the first engaging part 112 by means of the projection part 126. The second engaging part 122 would elastically restored upon being subjected to force to fasten the first engaging part 112 tightly as shown in FIG.3 as the elasticity of the connecting part 125, as a result permitting the first engaging part 112 to be engaged tightly with the second engaging part 122.

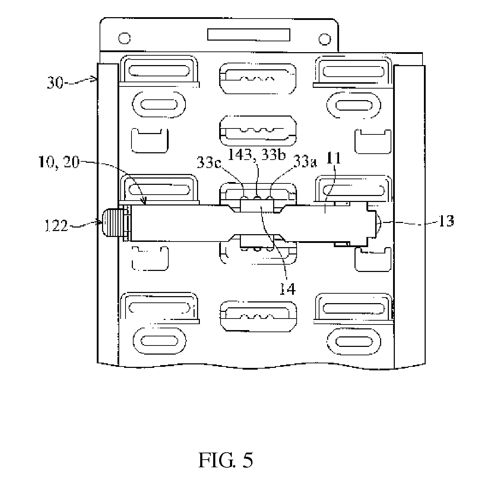

Referring to Fig.1, FIG.4 and FIG.5, the computer host 30 includes a casing 31 and an engaging portion 32 which is mounted on the casing 31. The engaging portion 32 includes a plurality of depression parts 33a, 33b, 33c. Preferably, the engaging portion is structured to be box-shaped groove according to the present embodiment. The assemblement that the electronic device 20 and the fixing device 10 fixed integrally in advance can be assembled into the computer host 30 by means of the elastic member 14. When the elastic member 14 is fixedly connected to the engaging portion 32, that is, to set the elastic member 14 into the engaging portion which is structured to be box-shaped groove, the engaging side 141 and the connecting side 142 can be elastically compressed a little upon being subjected to force due to the clearance 145 between the engaging side 141 and the connecting side 142, thereby facilitating assembling. Under the condition that the positioning spot 143 is engaged with one of the depression parts 33a, 33b, 33c, the assemblement that the electronic device 20 and the fixing device 10 can be fixedly positioned in the computer host 30. It should be noted that the positioning spot 143 may be engaged with any one of the depression parts 33a, 33b, 33c optionaly, so that the electronic device 20 with different sizes can be fixed to the computer host 30 at appropriate position.

Accordingly, the present invention is to provide a fixing device and a fixing module to make the electronic device fixed to the computer host, without using the screw driver and the bolts at all, thereby enabling the electronic device to be more quickly and conveniently assembled on or disassembled from the computer host.

Although the invention has been explained in relation to its preferred embodiment, many other possible modifications and variations can be made without departing from the spirit and scope of the invention as hereinafter claimed.

## Claims

1. A fixing device of electronic device to make the electronic device fixed to the computer host wherein the electronic device includes a hole, the computer host includes engaging portions with a plurality of depression parts, comprising:
a first member provided with a first connecting portion and a first engaging part;
a second member provided with a second engaging part;
a connecting element between the first member and the second member to make the first member and the second member to rotate relatively centred around the connecting element, and
an elastic member to connect to the engaging portion;
**characterized by** wherein the first connecting portion is connected to the hole for connecting the fixing device to the electronic device, the first engaging part is connected to the second engaging part to make the first member cover the second member.

2. The fixing device of electronic device according to claim 1, wherein the second member further includes a second connecting portion which is structured to be aperture, in order that the first connecting portion which is protruding extends through the second connecting portion to be connected to the hole when the first member is covered to the second member.

3. The fixing device of electronic device according to claim 1, wherein the connecting element is structured to be hinge or flexible means which can be bended.

4. The fixing device of electronic device according to claim 1, wherein the elastic member includes a engaging side which contacts to the engaging portion to make the fixing device connected to the computer host, a connecting side which conncected adjacent to the second member, a bending part formed between the engaging side and the connecting side to make a clearance therebetween, and a positioning spot which is protruded out of the engaging side and connected to one of the depression parts.

5. The fixing device of electronic device according to claim 1, wherein the second engaging part includes a connecting part, a proturding part and a press part with one end of the connecting part mounted on the first end of the second member in a flexible mode, and the proturding part and the press part connected to the other end of the connecting part.

6. The fixing device of electronic device according to claim 1, wherein the second engaging part is J-shaped.

7. A fixing module of a computer host and an electronic device, comprising:
an engaging portion on the host;
a hole on the electronic device and
a fixing device which includes
a first member provided with a first connecting portion and a first engaging part;
a second member provided with a second engaging part;
a connecting element between the first member and the second member to make the first member and the second member to rotate relatively centred around the connecting element, and
an elastic member to connect to the engaging portion;
wherein the first connecting portion is connected to the hole for connecting the fixing device to the electronic device, the first engaging part is connected to the second engaging part to make the first member cover the second member.

8. The fixing module of a computer host and an electronic device according to claim 7, wherein the second member further includes a second connecting portion which is structured to be aperture, in order that the first connecting portion which is protruding extends through the second connecting portion to be connected to the hole when the first member is covered to the second member.

9. The fixing module of a computer host and an electronic device according to claim 7, wherein the connecting element is structured to be hinge or flexible means which can be bended.

10. The fixing module of a computer host and an electronic device according to claim 7, wherein the engaging portion includes a plurality of depression parts.

11. The fixing module of a computer host and an electronic device according to claim 10, wherein the elastic member includes a engaging side which contacts to the engaging portion to make the fixing device connected to the computer host, a connecting side which conncected adjacent to the second member, a bending part formed between the engaging side and the connecting side to make a clearance therebetween, and a positioning spot which is protruded out of the engaging side and connected to one of the depression parts.

12. The fixing module of a computer host and an electronic device according to claim 7, wherein the second engaging part includes a connecting part, a proturding part and a press part with one end of the connecting part mounted on the first end of the second member in a flexible mode, and the proturding part and the press part connected to the other end of the connecting part.

13. The fixing module of a computer host and an electronic device according to claim 7, wherein the second engaging part is J-shaped.

14. The fixing module of a computer host and an electronic device according to claim 7, wherein the engaging portion is structured to be box-shaped groove.

15. The fixing module of a computer host and an electronic device according to claim 7, wherein the electronic device includes a side face and the hole is formed in the side face.
